# EUROPÄISCHE PATENTSCHRIFT

(11) **EP 1 203 368 B1**
(45) Veröffentlichungstag und Bekanntmachung des Hinweises auf die Patenterteilung: **05.11.2003**
(21) Anmeldenummer: 00949206.7
(22) Anmeldetag: 21.06.2000
(51) Int. Cl.: G10L 17/00, G10L 15/26

(54) **EINRICHTUNG ZUR STEUERUNG VON AUTOMATEN**
CONTROL DEVICE FOR CONTROLLING VENDING MACHINES
DISPOSITIF DE COMMANDE POUR PILOTER DES MACHINES AUTOMATIQUES

(30) Priorität: 21.06.1999 DE 19928233; 06.10.1999 DE 19948366
(43) Veröffentlichungstag der Anmeldung: 08.05.2002
(73) Patentinhaber: Palux AG, D-97980 Bad Mergentheim (DE)
(72) Erfinder: HERRMANN, Rainer, D-97922 Lauda-Königshofen (DE); GREIWE, Hansdieter, D-97944 Boxberg (DE)
(74) Vertreter: Bohnenberger, Johannes, Dr.
(86) Internationale Anmeldenummer: EP0005749
(87) Internationale Veröffentlichungsnummer: WO00079515

(56) Entgegenhaltungen:
- WO-A-00/39789
- DE-A- 19 636 452
- DE-A- 19 705 471
- US-A- 5 548 660

## Beschreibung

Die Erfindung betrifft eine Steuereinrichtung zur Steuerung von Automaten, insbesondere Ausgabeautomaten zur Ausgabe von Speisen und Getränken und Automaten zur Einstellung von Parametern bei der Zubereitung von Speisen und Getränken, mit einer Einrichtung zur Identifizierung einer Person, die berechtigt ist, die Einrichtung zu bedienen und/oder zu programmieren.

Um aus einem Getränkeautomaten Produkte zu beziehen, verwendet ein Benutzer (z.B. Bedienungspersonal, Kellner usw.) hauptsächlich die am Automaten vorgegebenen Abrufmechanismen, welche in unterschiedlichster Form und Funktion verbreitet sind. Bei der Bedienung solch eines Automaten stehen dem Benutzer momentan hauptsächlich manuelle Identifikations- und Bezugsmöglichkeiten zur Verfügung. Dies sind beispielsweise Kellnerschlösser, Chipkartensysteme, Fingerabdruckerkennung, Iriserkennung sowie Produkttasten oder Touch-Screen-Tasten.

Nachteilig bei den heutzutage eingesetzten Verfahren ist die Tatsache, daß durch die Vielzahl sowie die Art der vorgegebenen Bedienmechanismen eine sehr starke Beeinträchtigung der Handlungsfähigkeit des Bedieners bedingt ist. Dies erfolgt insbesondere dadurch, daß z.B. ein Identifikationssystem, wie ein Kellnerschloß, Chipkarte, Tastatur usw., von Hand bedient werden muß, so daß der Vorbereitungsprozeß, um letztlich ein gewünschtes Produkt zu beziehen (z.B. Becher, Tasse, Untertasse usw.) zeitaufwendig ist. Des weiteren ist es beispielsweise für behinderte Personen nur schlecht oder überhaupt nicht möglich, die jeweiligen Bedienungsmechanismen zu betätigen.

Aus der DE 196 36 452 A1 ist ein Mehrnutzersystem zur Spracheingabe bekannt, bei dem das wesentliche darin besteht, daß bei einem sprecherabhängigen Spracherkennungssystem ein gesondertes, für alle Nutzer gemeinsam zur Verfügung stehendes Sprachmustervokabular mit den Identifikationsworten der Nutzer vorhanden ist und für jeden Nutzer speziell ein weiteres Sprachmustervokabular mit den einsatzspezifischen Worten zur Verfügung gestellt wird.

Die Zuordnung des einsatzspezifischen Sprachmustervokabulars zum jeweiligen Nutzer erfolgt durch Spracherkennung eines nutzerspezifischen Identifikationswortes.

Dieses bekannte auf einer Spracheingabe basierende Mehrnutzersystem bietet jedoch keine besonders hohe Sicherheit, da rein durch Kenntnis eines einsatzspezifischen Wortes das betreffende System auch von einem Unbefugten jederzeit benutzt werden kann.

Darüber hinaus bietet dieses bekannte Mehrnutzersystem auch keine Möglichkeit, um einsatzspezifische Worte beispielsweise bestimmten Softwareabschnitten oder Hardwareabschnitten eines entsprechenden Automaten gezielt zuordnen zu können.

Aus der DE 197 05 471 A1 ist ein Verfahren und eine Schaltungsanordnung zur Spracherkennung und zur Sprachsteuerung von Vorrichtungen bekannt. Die Erkennung der Kommandoworte erfolgt bei diesem bekannten Verfahren bzw. Schaltungsanordnung prinzipiell dadurch, daß Kommandowortsignale digital aufgezeichnet werden und Merkmale der digital aufgezeichneten Signale berechnet werden, die in ein neuronales Netzwerk zur Ermittlung des zugehörigen Kommandowortes gespeichert werden.

Aus der US-A-5 548 660 ist eine Steuereinrichtung zur Steuerung von Automaten bekannt, mit einer Einrichtung zur Identifizierung einer Person, wobei die Identifizierungseinrichtung aus einer Spracheingabe- und Spracherkennungseinrichtung besteht und eine Sicherungseinrichtung vorgesehen ist, welche durch die Identifizierungseinrichtung austeuerbar ist.

Die der Erfindung zugrundeliegende Aufgabe besteht darin, eine Steuereinrichtung zur Steuerung von Ausgabeautomaten zur Ausgabe von Speisen und Getränken und Automaten zur Einstellung von Parametern bei der Zubereitung von Speisen und Getränken zu schaffen, mit der sehr verschiedenartige Funktionen eines jeweiligen Automaten gezielt über eine Spracheingabe angesteuert werden können, wobei gleichzeitig eine hohe Sicherheit für eine unbefugte Benutzung und Betätigung eines jeweiligen Automaten gewährleistet sein soll.

Diese Aufgabe wird erfindungsgemäß dadurch gelöst, daß
a) die Identifizierungseinrichtung aus einer Spracheingabeund Spracherkennungseinrichtung besteht, die anhand von im voraus abgespeicherten Sprachmustern und/oder Stimmenmustern eine jeweils berechtigte Person identifiziert,
b) eine Sicherungseinrichtung vorgesehen ist, welche durch die Identifizierungseinrichtung ansteuerbar ist, um abhängig vom jeweiligen Identifizierungsergebnis die Sprachsteuerung zuzulassen oder zu sperren, und
c) eine Sprachmuster-Analyseeinrichtung vorgesehen ist, welche anhand einer Sprachmusterbibliothek spezifische Sprachmustereingaben erkennt und die dafür ausgebildet ist, die erkannten Sprachmustereingaben den jeweiligen zu steuernden Parametern zuzuordnen, zu kanalisieren und in Steuersignale umzusetzen, derart, daß der jeweilige Hardware-/Softwareabschnitt des betreffenden, oben genannten Automaten das aus der Spracheingabe gewonnene Steuersignal jeweils zugeteilt erhält.

Bei einer praktischen Ausführungsform der vorliegenden Erfindung können die Sprachmuster durch Umlegen eines Schalters aufgenommen werden. Der Schalter kann hierbei real existieren oder virtuell, per Software, nachgebildet sein. Die Position des Schalters kann somit auf zweierlei Art zwischen "Sprachmusteraufnahme" und "Sprachmustererkennung" umgeschaltet werden.
1. Eine autorisierte Person meldet durch Einsprechen eines Schlüsselwortes z. B. "AUFNAHME", eine Aufnahmesequenz an. Nach einer Analyse des Sprachmusters - der Benutzer wird als berechtigter Benutzer erkannt - und nach Erkennung des gesprochenen Wortes als Kommandowort, wird der virtuelle Schalter auf "AUFNAHME" geschaltet.
2. Eine Person (autorisiert) schaltet mit einer Freischalteinrichtung (z. B. Schlüsselschalter, Infrarot) die Steuereinrichtung auf "AUFNAHME".
   Nach Ablauf einer Beruhigungszeit, zeigt die Steuereinrichtung je nach Konfiguration die weitere Vorgehensweise an:
   1.a. Konfiguration mit Berechtigungsstufe:
      Durch gegebenenfalls schnelles Blinken einer LED zeigt die Steuereinrichtung an, daß die Berechtigungsstufe für den neu anzumeldenden Benutzer zugesagt werden kann. Die Vorgabe des Wortes wird auf Autorisierung und Kommando geprüft. Schlägt eine Prüfung fehl, so kehrt die Steuereinrichtung in ihre Ausgangslage bzw. Ausgangszustand zurück.
      Wird die Vorgabe als "gut" erkannt, so erfolgt der Eintrag dieser Berechtigungsstufe in das für den neu einzutragenen Benutzer vorgesehene Feld, d. h. der ID-Datenbank.
   1.b. Nach Ablauf einer Beruhigungszeit signalisiert die Steuereinrichtung z. B. durch niedrige (im Vergleich zu 1.a.) Blinkfrequenz der LED, daß sie aufnahmebereit ist. Der neu anzumeldende Benutzer spricht daraufhin ein Erkennungswort. Das festgestellte Sprachmuster wird zunächst in der ID-Datenbank gesucht.

   Ist in der Konfiguration der Steuereinrichtung z. B. eingestellt: "Benutzer mehrfach zulassen", so wird das Sprachmuster in der ID-Datenbank abgelegt.
   Ist in der Konfiguration der Steuereinrichtung jedoch eingestellt: "Benutzer nicht mehrfach zulassen", so wird das Sprachmuster nicht in der ID-Datenbank abgelegt.
   Die Sequenz ist damit abgeschlossen. Die Spracherkennungseinrichtung kehrt daraufhin in ihren Ausgangszustand zurück.

Die Erfindung kann dadurch eine vorteilhafte Ausgestaltung erfahren, daß die Identifizierungseinrichtung dafür ausgebildet ist, die eingegebenen Sprachsignale hinsichtlich eines Schlüsselwortes zu analysieren.

Die Steuereinrichtung nach der vorliegenden Erfindung bietet damit eine doppelte Sicherheit, da die Ansteuerung des betreffenden Automaten durch eine Spracheingabe erst dann freigegeben werden kann, wenn sowohl eine Identifizierung eines bestimmten Schlüsselwortes stattgefunden hat als auch die Stimme der betreffenden Person erkannt worden ist und diese Person damit als berechtigte Person identifiziert worden ist.

Mit anderen Worten ist die Identifizierungseinrichtung dafür ausgebildet, die eingegebenen Sprachsignale sowohl hinsichtlich eines Schlüsselwortes als auch hinsichtlich eines Stimmenmusters zu analysieren.

Um die Möglichkeit zu schaffen, daß mehrere berechtigte Personen einen jeweiligen Automaten ansprechen können, ist erfindungsgemäß eine Identifizierungsdatenbank vorgesehen, welche mehrere Stimmenmuster und/oder Schlüsselwörter speichert, um mehrere berechtigte Personen zu identifizieren.

Die oben genannte Sicherungseinrichtung kann ferner je nach Anwendungsfall aktivierbar und deaktivierbar sein.

Wenn die Steuereinrichtung nach der vorliegenden Erfindung beispielsweise in einem Bereich oder einem Raum zur Anwendung gelangt, in den nur berechtigte Personen hineingelangen können, so kann die Sicherungseinrichtung deaktiviert werden, so daß alle berechtigten Personen auf den jeweils anzusteuernden Automaten Zugriff erhalten. (Zum Beispiel auch im Selbstbedienungsbetrieb eines Warenautomaten SB).

Die Sicherheit der Spracherkennung wird ferner dadurch noch erhöht, daß gemäß einer weiteren Ausgestaltung der Erfindung eine Anzeigeeinrichtung vorgesehen ist, die sowohl eine richtig erkannte Spracheingabe als auch eine fehlerhafte nicht erkannte Spracheingabe signalisiert. Dadurch wird der Benutzer informiert und gleichzeitig wird eine fehlerhafte Ansteuerung des Automaten nahezu ausgeschlossen.

Eine besonders vorteilhafte Ausführungsform der Erfindung umfaßt ferner mehrere gleichartige oder verschiedene, über ein Netzwerk miteinander verbundene Automaten, die durch jeweils eine eigene Identifizierungsnummer (ID-Zahl) identifizierbar und auch ansteuerbar sind.

Bei dieser letzeren Ausführungsform kann jedem Automaten ein eigenes spezifisches Schlüsselwort zugeordnet sein, um den jeweiligen Automaten über ein spezifisches Schlüsselwort zu identifizieren und für eine Steuerung zu selektieren.

Die Steuereinrichtung nach der vorliegenden Erfindung ist ferner noch mit einem Datensammelsystem ausgestattet, welches die eingegebenen und ausgewerteten Spracheingaben sammelt und welches mit einem Kassensystem verbunden ist, um die erkannten und ausgewerteten Spracheingaben für die Erstellung eines Rechnungsbeleges, insbesondere mit Detailangaben, zu verwenden. Eine praktische Ausführungsform der Erfindung umfaßt ein sogenanntes "Guest Check Terminal", welches die folgenden Funktionen hat:

Das Guest Check Terminal ist räumlich an einem Warenautomaten oder in dessen Nähe angebracht. Eine manuelle Eingabe kann hierbei vollständig entfallen. Ein Kellner bestellt z. B. an einem Kaffeeautomaten per Sprache: "Einen Kaffee - Tisch 5, Stuhl 3". Die Information wird von der Steuereinrichtung zum Kassensystem geleitet. Zeitgleich erfolgt die Produktanforderung am Warenautomaten, und zwar ohne daß dort eine Produkttaste oder ähnliches betätigt werden muß. Erfolgt nun die Freigabe vom Kassensystem (der Kellner ist berechtigt, das Produkt verfügbar usw.), so gibt der Warenautomat die Bestellung aus. In gleicher Weise kann nun per Spracheingabe die Gast-Rechnung gestellt werden.

Eine Eingabe: "Rechnung Tisch 5, Stuhl 3" - Rechnung wird am Kassensystem erstellt.

Eine weitere Ausgestaltung der erfindungsgemäßen Steuereinrichtung besteht ferner auch darin, diese mit einem Funkmikrofon oder einem sogenannten Ordermann (Funk-Bestellsystem) auszustatten. Ein Kellner ist damit in der Lage, die Bestellung eines Gastes direkt zu sprechen. Die Bestellungen oder auch Rechnungsanforderungen werden dann in der oben beschriebenen Weise erkannt, interpretiert und an die jeweiligen Systeme weitergeleitet.

Ähnliches ist auch z. B. im Küchenbereich realisierbar, indem ein Koch oder eine andere Person, die gerätezugriffsberechtigt ist, die Geräte verbal steuert, indem der Koch oder andere Person in das Terminal (eventuell mit Funkmikrofon) spricht:

"Heißluftdämpfer Gartemperatur 180°C" oder "Nachbräunen 5 Minuten".

Die Geräte sind hierbei funktechnisch oder in anderer Weise vernetzt und benötigen prinzipiell keine Bedienungselemente mehr. Sie können somit auch nicht unmittelbar von nicht berechtigten Personen beeinflußt oder betätigt werden. Der Abruf automatischer Garprogramme ist ebenfalls möglich, indem der "Beschicker" nur noch die Art und Beschaffenheit der eingegebenen Rohware angibt (z. B. "Backerbsen mittelfeucht"). Danach werden über das Netzwerk die entsprechenden Garprogramme aufgerufen bzw. geladen und ausgeführt.

Eine breite Anwendbarkeit der Steuereinrichtung nach der vorliegenden Erfindung wird ferner dadurch erzielt, daß die Identifizierungseinrichtung dafür ausgebildet ist, Spracheingaben verschiedener berechtigter Personen nach Prioritäten zu klassifizieren.

Wenn der betreffende anzusteuernde Automat beispielsweise dafür ausgebildet ist, um die in einer Küche anfallenden verschiedenen Funktionen zu steuern, so kann die Steuereinrichtung nach der vorliegenden Erfindung eine Spracheingabe eines Chefkochs mit der höchsten Priorität belegen, während die Spracheingabe eines Lehrlings die niedrigste Priorität erhält.

Die jeweiligen Spracheingaben können dabei sowohl die Temperatureinstellung zur Bereitung einer bestimmten Speise, die Lüftung über einem Herd, Klimaanlage usw. betreffen.

Die Klassifizierung kann dabei zweckmäßigerweise anhand einer Stimmenanalyse und/oder anhand von verschiedenen Schlüsselwörtern erfolgen.

Im folgenden wird die Erfindung anhand von Ausführungsbeispielen unter Hinweis auf die Zeichnung näher erläutert. Es zeigen:
- Fig. 1: ein schematisches Blockschaltbild einer Steuereinrichtung mit Merkmalen nach der Erfindung;
- Fig. 2: die Steuereinrichtung nach der Erfindung in Verbindung mit mehreren Automaten, die über ein Netzwerk miteinander verbunden sind;
- Fig. 3: eine spezifische Ausgestaltung der erfindungsgemäßen Steuereinrichtung mit einem Kassensystem; und
- Fig. 4: eine Ausführungsform, die speziell in einer Küchenumgebung vorteilhaft ist.

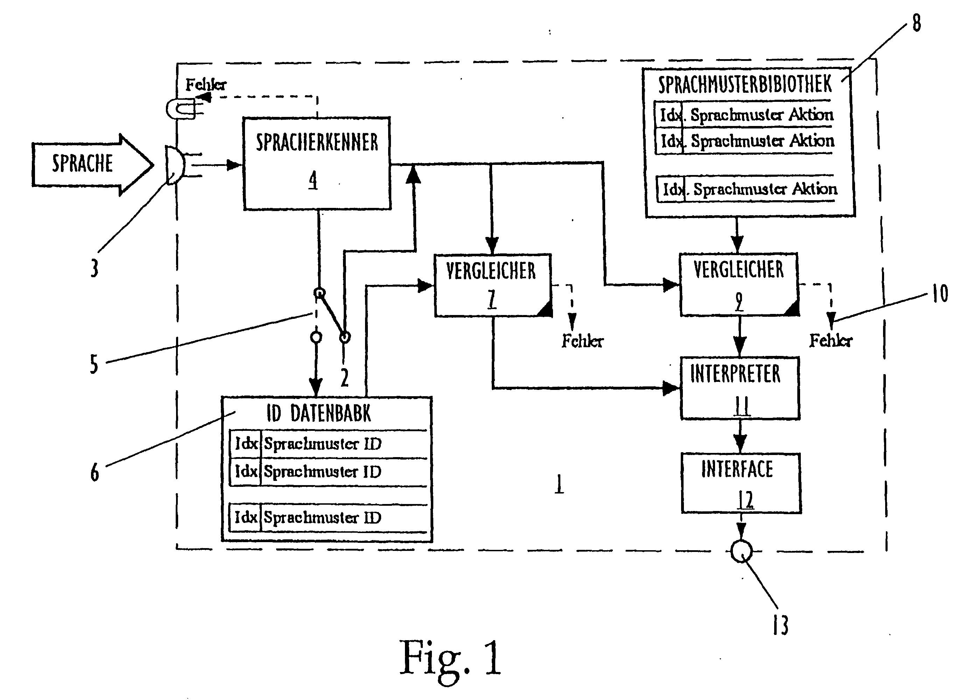

Fig. 1 zeigt schematisch in Form eines Blockschaltbildes eine Ausführungsform der Steuereinrichtung nach der vorliegenden Erfindung, die allgemein mit 1 bezeichnet ist. Die gezeigte Steuereinrichtung umfaßt ein Eingabemikrophon 3 zur Eingabe von Sprache, einen Spracherkenner 4, der über eine Schaltereinrichtung 5 mit einer Datenbank 6 verbindbar ist, wobei in der Datenbank 6 Sprachmuster und/oder Stimmenmuster von berechtigten Personen abgespeichert sind und abgespeichert werden können. Wenn der Spracherkenner 4 mit der Datenbank 6 über die Schaltereinrichtung 5 verbunden ist, besteht auch die Möglichkeit, in der Datenbank weitere Sprachmuster (Schlüsselwörter) und/oder Stimmenmuster von weiteren berechtigten Personen abzuspeichern.

Der Spracherkenner 4, die Datenbank 6 und ein Vergleicher 7, der an den Ausgang der Datenbank und den Ausgang des Spracherkenners 4 geschaltet ist, bilden zusammen eine Identifizierungseinrichtung, um eine berechtigte Person anhand eines über das Mikrophon 3 eingegebenen Kodewortes und/oder Stimmenmusters zu identifizieren.

Der Ausgang des Vergleichers 7 ist mit einem Interpreter 11 verbunden, der je nach dem Vergleichsergebnis in dem Vergleicher 7 beispielsweise entweder gesperrt oder freigegeben werden kann.

Der Vergleicher 7 bildet zusammen mit dem Interpreter 11 eine Sicherungseinrichtung, welche durch die genannte Identifizierungseinrichtung ansteuerbar ist, um abhängig vom jeweiligen Identifizierungsergebnis die Sprachsteuerung zuzulassen oder zu sperren.

Der Ausgang des Spracherkenners 4 ist mit einem weiteren Vergleicher 9 verbunden, der als zweite Eingangsgröße Daten von einer Sprachmusterbibliothek 8 empfängt, um festzustellen, ob ein eingespeistes Wort einen bestimmten Befehl darstellt, der als Sprachmuster (z.B. als Wort) in der Sprachmusterbibliothek 8 abgespeichert ist.

Für den Fall, daß das eingegebene Sprachsignal einen sinnvollen Befehl ergibt, dessen sprachliches Grundmuster in der Sprachmusterbibliothek 8 abgelegt ist, gibt der Vergleicher 9 ein entsprechendes Signal an den Interpreter 11 aus, der den erkannten Befehl bzw. Sprachmuster interpretiert und kanalisiert, um einem jeweiligen Hardwareabschnitt oder Softwareabschnitt eines betroffenen Automaten über ein Interface 12 ein entsprechendes Steuersignal zuzuleiten. Das Steuersignal wird dann an dem Ausgangsanschluß 13 ausgegeben und zu dem jeweils zugeordneten Hardwareabschnitt und/oder Softwareabschnitt eines jeweiligen Automaten zugewiesen.

Es ist offensichtlich, daß der Interpreter 11 in sehr verschiedener Weise ausgeführt sein kann und beispielsweise Einrichtungen enthalten kann, um Datenblöcke zu erzeugen, die einen Adressen-Kopfabschnitt, einen Datenabschnitt und einen Steuerabschnitt in der üblichen bekannten Weise enthalten.

Die jeweiligen Datenblöcke können dann anhand eines Adressen-Kopfabschnittes bzw. Adressenfeldes zu dem richtigen Abschnitt eines Automaten gesendet werden, um in diesem Abschnitt beispielsweise bestimmte Parameter auf gewünschte Werte einzustellen.

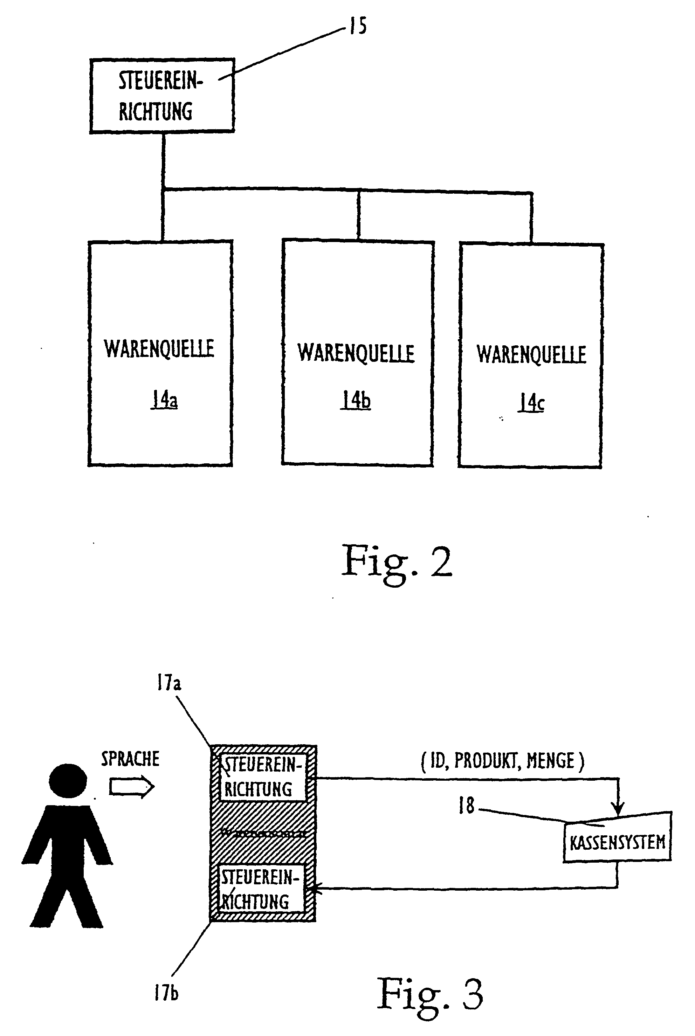

Fig. 2 zeigt eine Ausgestaltung der erfindungsgemäßen Steuereinrichtung, die dafür ausgebildet ist, um mehrere Terminals über ein Netzwerk anhand einer zentralen Spracheingabestelle 15 anzusteuern. Bei dem in Fig. 2 gezeigten Blockschaltbild kann die Spracheingabestation 15 gemäß dem Blockschaltbild nach Fig. 1 aufgebaut sein. Die Steuereinrichtung 1 nach Fig. 1 ist über ein nicht näher bezeichnetes Netzwerk mit mehreren gleichartigen oder auch verschiedenen Automaten 14a, 14b und 14c verbunden, wobei die Automaten Warenquellen enthalten können.

Mit Hilfe des erläuterten Steuerverfahrens kann jeder einzelne Automat selektiv angesprochen werden und es können Waren aus den Automaten 14a bzw. 14b bzw. 14c selektiv ausgegeben werden.

Bei der in Fig. 3 gezeigten Ausführungsform ist die Steuereinrichtung mit einem Kassensystem 18 verbunden und die Steuereinrichtung enthält Datensammeleinrichtungen 17a, 17b (17a bezeichnet eine Steuereinrichtung mit einer Spracherkennung, wie sie in Fig. 1 dargestellt ist, 17b besteht aus einer Automatensteuerung) die dafür ausgebildet oder dafür programmiert sein können, um Detailangaben, wie beispielsweise eine Anfrage, eine ID, Produktart, Menge usw., zu sammeln und zu übertragen. Das Kassensystem 18 kann über eine weitere Leitung mit einem der Datensammeleinrichtung 17b der Steuereinrichtung verbunden sein, wobei in dieser Einrichtung 17b beispielsweise Preislisten für die verschiedensten Waren gespeichert sein können, wobei die betreffenden Speicher zweckmäßigerweise programmierbar ausgeführt sind.

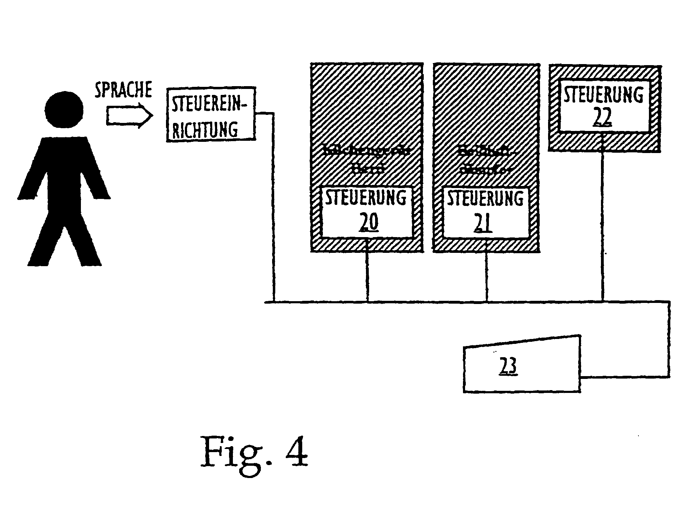

Bei der in Fig. 4 gezeigten Anordnung ist die erfindungsgemäße Steuereinrichtung dafür eingesetzt, um einen oder mehrere Automaten zu steuern, die in einer Küchenumgebung installiert sind. Über die Steuereinrichtung, wie sie in Fig. 1 im Prinzip dargestellt ist, können Küchengeräte, wie beispielsweise ein Küchenherd 20, ein Heißluftdämpfer 21, eine Lüftung 22 oder auch eine Rezeptverwaltung 23, selektiv angesteuert werden.

Die erfindungsgemäße Steuereinrichtung ermöglicht es, sehr verschiedenartige Einrichtungen und Geräte ohne die Verwendung von irgendwelchen Tasten oder Chipkarten und ähnlichem lediglich durch eine Spracheingabezu steuern, wobei dann eine hohe Sicherheit für die einzelnen Steuerschritte erreicht wird, wenn die Identifizierung einer eingegebenen Sprache anhand von zwei Kriterien erfolgt, nämlich das Auftreten eines ganz spezifischen Schlüsselwortes zusammen mit dem Auftreten eines spezifischen Stimmenmusters, welches nur einer bestimmten Person zugeordnet ist.

Für den Fachmann sind eine Reihe von Änderungen und Abwandlungen der dargestellten und beschriebenen Ausführungsbeispiele möglich, ohne dabei den Rahmen der vorliegenden Erfindung zu verlassen.

So besteht beispielsweise die Möglichkeit, ein Netzwerk nicht nur mit einer einzelnen Steuereinrichtung im Sinne der Schaltungsanordnung nach Fig. 1 auszustatten, sondern eine derartige Steuereinrichtung an mehreren Knotenstellen (in mehreren verschiedenen Räumen) mit einem Netz zu koppeln, so daß die Steuerung von mehreren Räumen aus vorgenommen werden kann.

Darüber hinaus besteht auch die Möglichkeit, die Identifizierungseinrichtung in der Steuereinrichtung nach Fig. 1 derart auszubilden, daß die Spracheingaben verschiedener berechtigter Personen nach Prioritäten klassifiziert werden. Diese Klassifizierung kann zweckmäßigerweise anhand einer Stimmenanalyse und/oder anhand von verschiedenen Schlüsselwörtern erfolgen, die an verschiedene berechtigte Personen ausgegeben werden und die zweckmäßigerweise auch gelöscht und/oder umprogrammiert werden können.

Für den Fachmann ist es auch offensichtlich, daß Abschnitte des Blockschaltbildes nach Fig.1 wie z.B die Identifizierungseinrichtung, die Spracherkennung und/oder die Sicherungseinrichtung durch ein Software-Programm realisiert werden können, welches auf einem Personal-Computer lauffähig ist.

## Patentansprüche

1. Steuereinrichtung zur Steuerung von Ausgabeautomaten zur Ausgabe von Speisen und Getränken und Automaten zur Einstellung von Parametern bei der Zubereitung von Speisen und Getränken, mit einer Einrichtung zur Identifizierung einer Person, die berechtigt ist, die Einrichtung zu bedienen und/oder zu programmieren, wobei
a) die Identifizierungseinrichtung aus einer Spracheingabe- und Spracherkennungseinrichtung (3,4,5,6) besteht, die anhand von im voraus abgespeicherten Sprachmustern und/oder Stimmenmustern eine jeweils berechtigte Person identifiziert,
b) eine Sicherungseinrichtung (6,7,11) vorgesehen ist, welche durch die Identifizierungseinrichtung ansteuerbar ist, um abhängig vom jeweiligen Identifizierungsergebnis die Sprachsteuerung zuzulassen oder zu sperren, und
c) eine Sprachmuster-Analyseeinrichtung (8,9,10,11,12) vorgesehen ist, welche anhand einer Sprachmusterbibliothek (8) spezifische Sprachmustereingaben erkennt und die dafür ausgebildet ist, die erkannten Sprachmustereingaben den jeweiligen zu steuernden Parametern zuzuordnen, zu kanalisieren und in Steuersignale umzusetzen, derart, daß der jeweilige Hardware-/Softwareabschnitt des betreffenden, oben genannten Automaten das aus der Spracheingabe gewonnene Steuersignal zugeteilt erhält.

2. Steuereinrichtung nach Anspruch 1,
**dadurch gekennzeichnet, daß** die Identifizierungseinrichtung dafür ausgebildet ist, die eingegebenen Sprachsignale hinsichtlich eines Schlüsselwortes zu analysieren.

3. Steuereinrichtung nach Anspruch 1 oder 2,
**dadurch gekennzeichnet, daß** die Identifizierungseinrichtung dafür ausgebildet ist, die einzelnen Sprachsignale sowohl hinsichtlich eines Schlüsselwortes als auch hinsichtlich eines Stimmenmusters zu analysieren.

4. Steuereinrichtung nach einem der Ansprüche 1 bis 3,
**dadurch gekennzeichnet, daß** eine Identifizierungsdatenbank (6) vorgesehen ist, welche mehrere Stimmenmuster und/oder Schlüsselwörter speichert, um mehrere berechtigte Personen zu identifizieren.

5. Steuereinrichtung nach einem der Ansprüche 1 bis 4,
**dadurch gekennzeichnet, daß** die Sicherungseinrichtung(6,7,11) aktivierbar und deaktivierbar (bei 5) ist.

6. Steuereinrichtung nach einem der vorhergehenden Ansprüche,
**gekennzeichnet durch**
eine Anzeigeeinrichtung, die sowohl eine richtig erkannte Spracheingabe als auch eine fehlerhafte, nicht erkannte Spracheingabe signalisiert.

7. Steuereinrichtung nach einem der vorhergehenden Ansprüche,
**gekennzeichnet durch**
**durch** mehrere gleichartige oder verschiedene, über ein Netzwerk miteinander verbundene Automaten (14a, 14b, 14c; 20,21), die **durch** jeweils eine eigene Identifizierungsnummer (ID) identifizierbar und ansteuerbar sind.

8. Steuereinrichtung nach Anspruch 7,
**dadurch gekennzeichnet, daß** jedem Automaten (14a, 14b, 14c; 20,21) ein eigenes Schlüsselwort zugeordnet ist, um einen jeweiligen Automaten über ein spezifisches Schlüsselwort zu identifizieren und für eine Steuerung zu selektieren.

9. Steuereinrichtung nach einem der vorhergehenden Ansprüche,
**gekennzeichnet durch**
ein Datensammelsystem (17a, 17b), welches die eingegebenen und ausgewerteten Sprachdaten sammelt und welches mit einem Kassensystem (18) verbunden ist, um die erkannten und ausgewerteten Sprachdaten für die Erstellung eines Rechnungsbeleges, insbesondere mit Detailangaben, zu verwenden.

10. Steuereinrichtung nach einem der Ansprüche 1 bis 6,
**dadurch gekennzeichnet, daß** die Identifizierungseinrichtung dafür ausgebildet ist, Spracheingaben verschiedener berechtigter Personen nach Prioritäten zu klassifizieren.

11. Steuereinrichtung nach Anspruch 10,
**dadurch gekennzeichnet, daß** die Klassifizierung anhand einer Stimmenanalyse und/oder anhand von verschiedenen Schlüsselwörtern erfolgt.

12. Steuereinrichtung nach einem der vorhergehenden Ansprüche,
**dadurch gekennzeichnet, daß** wenigstens die Identifizierungseinrichtung und die Spracherkennungseinrichtung als Softwareprogramm ausgeführt sind, welches auf einem Personal-Computer lauffähig ist.

13. Steuereinrichtung nach Anspruch 1, **gekennzeichnet**
**durch** einen Schalter (5) mit wenigstens zwei Schaltpositionen, wobei in einer ersten Schaltposition des Schalters eine Sprachmusteraufnahme ermöglicht wird und in einer zweiten Schaltstellung des Schalters eine Sprachmustererkennung durchführbar ist.

14. Steuereinrichtung nach Anspruch 13,
**dadurch gekennzeichnet, daß** der Schalter durch eine Software gebildet ist und von der Sprachmustererkennungseinrichtung ansteuerbar ist, derart, daß der Schalter nach einem erfolgreichen Erkennen eines Benutzers bzw. einer berechtigten Person automatisch auf "AUFNAHME" geschaltet wird.

15. Steuereinrichtung nach Anspruch 13,
**gekennzeichnet**
**durch** eine Freischalteinrichtung, insbesondere in Form eines Schlüsselschalters oder Infrarotschalters, welche den Schalter auf "AUFNAHME" schalten kann.

16. Steuereinrichtung nach einem der vorhergehenden Ansprüche,
**gekennzeichnet**
**durch** ein Funkmikrofon oder ein Funk-Bestellsystem, welches mit der Steuereinrichtung per Funk verbunden ist.

## Claims

1. Control device for controlling dispensing machines for dispensing food and drink, and machines for setting parameters in the preparation of food and drink, with a device to identify a person who is entitled to operate and/or program the device, wherein
a) the identification device comprises a speech input and voice recognition device (3, 4, 5, 6) which identifies an authorised person from speech patterns and/or voice patterns previously stored,
b) a security device (6, 7, 11) is provided which can be controlled by the identification device in order to allow or block the speech control depending on the respective identification result, and
c) a speech pattern analysis device (8, 9, 10, 11, 12) is provided which from a speech pattern library (8) recognises specific speech pattern inputs and is designed to allocate and channel the recognised speech pattern inputs to the respective parameters to be controlled, and convert said inputs into control signals such that the respective hardware/software section of the said machines receives the control signal obtained from the voice input.

2. Control device according to claim 1, **characterised in that** the identification device is designed to analyse the inputted speech signals with regard to a code word.

3. Control device according to claim 1 or 2, **characterised in that** the identification device is designed to analyse the individual speech signals with regard to both a code word and a voice pattern.

4. Control device according to any of claims 1 to 3, **characterised in that** an identification database (6) is provided which stores several voice patterns and/or code words in order to identify several authorised persons.

5. Control device according to any of claims 1 to 4, **characterised in that** the security device (6, 7, 11) can be activated and de-activated (with 5).

6. Control device according to any of the preceding claims, **characterised by** a display device which signals both a correctly recognised speech input and a defective, unrecognised speech input.

7. Control device according to any of the preceding claims, **characterised by** several similar or different machines (14a, 14b, 14c; 20, 21) which are connected together via a network and can each be identified and controlled by a unique identification number (ID).

8. Control device according to claim 7, **characterised in that** a unique code word is allocated to each machine (14a, 14b, 14c; 20, 21) in order to identify a particular machine by a specific code word and select this machine for control.

9. Control device according to any of the preceding claims, **characterised by** a data collection system (17a, 17b) which collects the speech data entered and analysed and which is connected to a cashpoint system (18) in order to use the recognised and analysed speech data for production of an invoice voucher, in particular with detailed information.

10. Control device according to any of claims 1 to 6, **characterised in that** the identification device is designed to classify by priority speech inputs from various authorised persons.

11. Control device according to claim 10, **characterised in that** the classification takes place on the basis of a voice analysis and/or various code words.

12. Control device according to any of the preceding claims, **characterised in that** at least the identification device and the speech recognition device are produced as software programs which can run on a personal computer.

13. Control device according to claim 1, **characterised by** a switch (5) with at least two switch positions, wherein in a first switch position a speech pattern can be recorded and in a second switch position a speech pattern recognition can be performed.

14. Control device according to claim 13, **characterised in that** the switch is formed by software and can be controlled by the speech pattern recognition device such that after successful recognition of a user or an authorised person, the switch is set to "RECORD".

15. Control device according to claim 13, **characterised by** a free switching device, in particular in the form of a key switch or infrared switch, which can set the switch to "RECORD".

16. Control device according to any of the preceding claims, **characterised by** a radio microphone or a radio command system which is connected by radio to the control device.

## Revendications

1. Dispositif de commande pour commander des distributeurs automatiques pour la distribution d'aliments et de boissons et des automates pour le réglage de paramètres lors de la préparation d'aliments et de boissons, comprenant un dispositif pour l'identification d'une personne autorisée à manipuler et/ou à programmer le dispositif,
a) le dispositif d'identification se composant d'un dispositif d'entrée de parole et de reconnaissance de parole (3, 4, 5, 6), qui identifie à l'aide d'échantillons de parole et/ou de voix préalablement mémorisés une personne autorisée,
b) un dispositif de sécurité (6, 7, 11) étant prévu, qui peut être commandé par le dispositif d'identification pour autoriser ou interdire selon le cas le contrôle par la parole en fonction du résultat d'identification, et
c) un dispositif d'analyse d'échantillons de parole (8, 9, 10, 11, 12) étant prévu, qui reconnaît des entrées d'échantillons de parole spécifiques à l'aide d'une bibliothèque d'échantillons de parole (8) et qui est configuré pour associer les entrées d'échantillons de parole aux paramètres respectifs à contrôler, les canaliser et les convertir en signaux de commande, de sorte que la section de logiciel/matériel respective de l'automate précité concerné reçoit de façon répartie le signal de commande obtenu à partir de l'entrée de parole.

2. Dispositif de commande suivant la revendication 1,
**caractérisé en ce que**
le dispositif d'identification est configuré pour analyser les signaux de parole introduits relativement à un mot-clé.

3. Dispositif de commande suivant l'une des revendications 1 et 2,
**caractérisé en ce que**
le dispositif d'identification est configuré pour analyser les signaux de parole individuels aussi bien relativement à un mot-clé que relativement à un échantillon de voix.

4. Dispositif de commande suivant l'une des revendications 1 à 3,
**caractérisé en ce que**
il est prévu une banque de données d'identification (6), qui mémorise plusieurs échantillons de voix et/ou mots-clés pour identifier plusieurs personnes autorisées.

5. Dispositif de commande suivant l'une des revendications 1 à 4,
**caractérisé en ce que**
le dispositif de sécurité (6, 7, 11) peut être activé et désactivé (en 5).

6. Dispositif de commande suivant l'une des revendications précédentes,
**caractérisé**
**par** un dispositif d'annonce qui signale aussi bien une entrée de parole reconnue correcte qu'une entrée de parole incorrecte, non reconnue.

7. Dispositif de commande suivant l'une des revendications précédentes,
**caractérisé**
**par** plusieurs automates (14a, 14b, 14c ; 20, 21) similaires ou différents, reliés entre eux par l'intermédiaire d'un réseau, qui peuvent être identifiés et commandés par un numéro d'identification respectif propre (ID).

8. Dispositif de commande suivant la revendication 7,
**caractérisé en ce que**
un mot-clé propre est associé à chaque automate (14a, 14b, 14c ; 20, 21), pour identifier un automate respectif par l'intermédiaire d'un mot-clé spécifique et le sélectionner pour une commande.

9. Dispositif de commande suivant l'une des revendications précédentes,
**caractérisé**
**par** un système de collecte de données (17a, 17b), qui collecte les données de parole introduites et exploitées et qui est relié à un système de caisse (18), afin d'utiliser les données vocales reconnues et exploitées pour l'établissement d'un ticket de caisse, en particulier avec des indications détaillées.

10. Dispositif de commande suivant l'une des revendications 1 à 6,
**caractérisé en ce que**
le dispositif d'identification est configuré pour classer des entrées de parole de différentes personnes autorisées en fonction de priorités.

11. Dispositif de commande suivant la revendication 10,
**caractérisé en ce que**
le classement est assuré à l'aide d'une analyse de voix et/ou à l'aide de différents mots-clés.

12. Dispositif de commande suivant l'une des revendications précédentes,
**caractérisé en ce que**
au moins le dispositif d'identification et le dispositif de reconnaissance de parole sont réalisés sous forme de programme logiciel, exécutable sur un ordinateur personnel.

13. Dispositif de commande suivant la revendication 1,
**caractérisé**
**par** un interrupteur (5) avec au moins deux positions de commutation, un enregistrement d'échantillons de parole étant rendu possible dans une première position de commutation de l'interrupteur, et une reconnaissance d'échantillons de parole étant réalisable dans une seconde position de commutation de l'interrupteur.

14. Dispositif de commande suivant la revendication 13,
**caractérisé en ce que**
l'interrupteur est formé par un logiciel et peut être commandé par le dispositif de reconnaissance d'échantillons de parole, de sorte que l'interrupteur est commuté automatiquement sur « ENREGISTREMENT » après une reconnaissance réussie d'un utilisateur ou d'une personne autorisée.

15. Dispositif de commande suivant la revendication 13,
**caractérisé**
**par** un dispositif de déconnexion, en particulier sous forme d'un interrupteur à clé ou d'un interrupteur à infrarouge, qui peut commuter l'interrupteur sur « ENREGISTREMENT ».

16. Dispositif de commande suivant l'une des revendications précédentes,
**caractérisé**
**par** un microphone radio ou par un système de commande par radio, qui est relié par radio au dispositif de commande.
